# EUROPEAN PATENT APPLICATION

(11) **EP 4 524 741 A1**
(43) Date of publication of application: **19.03.2025**
(21) Application number: 23846894.6
(22) Date of filing: 18.07.2023
(51) Int. Cl.: G06F 9/50, G06F 9/38, G06N 3/08

(54) **ELECTRONIC DEVICE AND CONTROL METHOD OF ELECTRONIC DEVICE**

(30) Priority: 29.07.2022 KR 20220094786; 20.09.2022 KR 20220118866
(71) Applicant: Samsung Electronics Co., Ltd., Suwon-si, Gyeonggi-do 16677 (KR)
(72) Inventor: UM, Taegeon, Suwon-si Gyeonggi-do 16677 (KR); KWEUN, Minhyeok, Suwon-si Gyeonggi-do 16677 (KR); OH, Byungsoo, Suwon-si Gyeonggi-do 16677 (KR)
(74) Representative: Gulde & Partner
(86) International application number: PCT/KR2023/010309
(87) International publication number: WO 2024/025235

(57) **Abstract**

An electronic device and a controlling method of the electronic device are provided. The electronic device includes a communicator; at least one memory configured to store data for a neural network model; at least one first processor configured to perform a training process of the neural network model; and at least one second processor configured to: perform a plurality of preprocessing processes for the training process, determine a first operation speed of at least one preprocessing process of the plurality of preprocessing processes performed by the at least one second processor and a second operation speed of the training process performed by the at least one first processor, based on the first operation speed being slower than the second operation speed, control the communicator to transmit at least one input value for the at least one preprocessing process to an external device connected to the electronic device, and obtain an output value corresponding to the at least one input value by receiving, through the communicator, a processing result of the external device for the at least one input value from the external device.

## Description

### Technical Field]

The disclosure relates to an electronic device and a method for controlling the electronic device, and more specifically, to an electronic device capable of efficiently performing an operation process for training a neural network model and a method for controlling the electronic device.

### [Background Art]

In recent years, the development of artificial intelligence (AI) technology has been accelerated, and in particular, research on technology for improving the efficiency of operation required in a training process of a neural network model has received attention.

Specifically, despite the development of technology for hardware used for training neural network models, there may be cases in which operational inefficiency occurs in at least part of a process of processing a large amount of data for training neural network models. In particular, when an operation delay or stall occurs during a data preprocessing process performed by a central processing unit (CPU), even a training process performed by a graphics processing unit (GPU) may also be delayed to significantly lower efficiency of the entire operation.

As an example of a related art technology for preventing such inefficiency of the operation process, there is a technique of performing a prefetch process of preparing next input data while a training process for input data is performed by the GPU, but even with this technique, delay of operation may occur and the technique cannot be a fundamental solution to delay of operation.

There is also a related art technique for increasing the efficiency of an operation by transmitting part of data to an external device, but there is a limitation in that the problem of operation delay cannot be effectively solved by clearly identifying the process causing the delay in operation. In addition, a limitation in that operation delay cannot be effectively resolved by transmitting only an appropriate amount of data to an external device is also pointed out.

### [Disclosure]

### [Technical Solution]

Provided are an electronic device capable of clearly identifying a portion that causes delay of operation during a preprocessing process performed prior to a training process of a neural network model and effectively solving a bottleneck phenomenon caused by the preprocessing, and a controlling method of the electronic device.

According to an aspect of the disclosure, an electronic device includes: a communicator; at least one memory configured to store data for a neural network model; at least one first processor configured to perform a training process of the neural network model; and at least one second processor configured to: perform a plurality of preprocessing processes for the training process, determine a first operation speed of at least one preprocessing process of the plurality of preprocessing processes performed by the at least one second processor and a second operation speed of the training process performed by the at least one first processor, based on the first operation speed being slower than the second operation speed, control the communicator to transmit at least one input value for the at least one preprocessing process to an external device connected to the electronic device, and obtain an output value corresponding to the at least one input value by receiving, through the communicator, a processing result of the external device for the at least one input value from the external device.

The at least one second processor may be further configured to: store a test value for the at least one preprocessing process in the at least one memory, and determine the first operation speed by repeatedly performing the at least one preprocessing process based on the stored test value.

The at least one second processor may be further configured to, based on the first operation speed being faster than the second operation speed, obtain an output value corresponding to the at least one input value by performing the at least one preprocessing process on the at least one input value.

The at least one second processor may be further configured to: control the communicator to transmit the test value to the external device, based on the at least one preprocessing process for the test value being performed by the external device, receive, from the external device through the communicator, information indicating a third operation speed, and determine a number of the at least one input value for the at least one preprocessing process to be transmitted to the external device based on at least one of a difference between the first operation speed and the second operation speed, the third operation speed, and a transmission amount of data transmittable through a bandwidth of a network connecting the electronic device and the external device.

The at least one second processor may be further configured to determine, as the number of the at least one input value to be transmitted to the external device, a minimum number among a number of input values that can be processed at an operation speed equal to a difference between the first operation speed and the second operation speed for a predetermined time period, a number of input values that can be processed at the third operation speed during the predetermined time period, and a number of input values that can be transmitted through a bandwidth of the network during the predetermined time period.

The at least one second processor may be further configured to, based on receiving, from the external device through the communicator, a processing result of the external device for the test value, determine the third operation speed based on a time point at which the test value is transmitted to the external device and a time point at which the processing result is received from the external device.

The at least one second processor may be further configured to, based on information on an operation speed of a processing process having the same operation structure as that of the at least one preprocessing process being stored in the at least one memory, determine the first operation speed based on the information on the operation speed stored in the at least one memory.

The at least one first processor may include a graphics processing unit (GPU) or a neural processing unit (NPU), and the at least one second processor may include a central processing unit (CPU) or a microprocessor unit (MPU).

According to an aspect of the disclosure, a method of controlling an electronic device, includes: determining a first operation speed of at least one preprocessing process of a plurality of preprocessing processes performed by at least one second processor of the electronic device and a second operation speed of a training process of a neural network model performed by at least one first processor of the electronic device; based on the first operation speed being slower than the second operation speed, transmitting at least one input value for the at least one preprocessing process to an external device connected to the electronic device, and obtaining an output value corresponding to the at least one input value by receiving a processing result of the external device for the at least one input value from the external device.

The determining may include: storing a test value for the at least one preprocessing process in at least one memory of the electronic device; and determining the first operation speed by repeatedly performing the at least one preprocessing process based on the stored test value.

The method may further include, based on the first operation speed being faster than the second operation speed, obtaining an output value corresponding to the at least one input value by performing the at least one preprocessing process on the at least one input value.

The method may further include: transmitting the test value to the external device; based on the at least one preprocessing process for the test value being performed by the external device, receiving, from the external device, information indicating a third operation speed; and determining a number of the at least one input value for the at least one preprocessing process to be transmitted to the external device based on at least one of a difference between the first operation speed and the second operation speed, the third operation speed, and a transmission amount of data transmittable through a bandwidth of a network connecting the electronic device and the external device.

The determining the number of the at least one input value may include determining, as the number of the at least one input value to be transmitted to the external device, a minimum number among a number of input values that can be processed at an operation speed equal to a difference between the first operation speed and the second operation speed for a predetermined time period, a number of input values that can be processed at the third operation speed during the predetermined time period, and a number of input values that can be transmitted through a bandwidth of the network during the predetermined time period.

The method may further include, based on receiving, from the external device, a processing result of the external device for the test value, determining the third operation speed based on a time point at which the test value is transmitted to the external device and a time point at which the processing result is received from the external device.

The method may further include, based on information on an operation speed of a processing process having the same operation structure as that of the at least one preprocessing process being stored in the at least one memory, determining the first operation speed based on the information on the operation speed stored in the at least one memory.

The at least one first processor may include a graphics processing unit (GPU) or a neural processing unit (NPU), and the at least one second processor may include a central processing unit (CPU) or a microprocessor unit (MPU).

According to an aspect of the disclosure, a non-transitory computer-readable recording medium storing instructions that by at least one processor execute a method of controlling an electronic device, the method including: determining a first operation speed of at least one preprocessing process of a plurality of preprocessing processes performed by at least one second processor of the electronic device and a second operation speed of a training process of a neural network model performed by at least one first processor of the electronic device; based on the first operation speed is slower than the second operation speed, transmitting at least one input value for the at least one preprocessing process to an external device connected to the electronic device; and obtaining an output value corresponding to the at least one input value by receiving a processing result of the external device for the at least one input value from the external device.

### [Description of Drawings]

FIG. 1 is a block diagram schematically showing a configuration of an electronic device according to an embodiment of the disclosure;
FIG. 2 is a diagram showing a plurality of preprocessing processes and training processes sequentially performed according to an embodiment of the disclosure;
FIG. 3 is a diagram illustrating a method of determining whether a third preprocessing process and a fourth preprocessing process, among a plurality of preprocessing processes, have an operation delay according to an embodiment of the disclosure;
FIG. 4 is a diagram illustrating a method of performing at least a portion of a third preprocessing process and a fourth preprocessing process through an external device according to an embodiment of the disclosure;
FIG. 5 is a block diagram showing a configuration of an external device together with a configuration of an electronic device for performing at least a portion of a preprocessing process according to the disclosure;
FIG. 6 is a block diagram showing a configuration of an electronic device according to an embodiment of the disclosure in detail; and
FIG. 7 is a flowchart illustrating a method of controlling an electronic device according to an embodiment of the disclosure.

### [Mode for Invention]

Hereinafter, various embodiments of the present disclosure are described with reference to the accompanying drawings. However, it should be appreciated that the present disclosure is not limited to a specific embodiment and all modifications, equivalents and/or alternatives thereof also belong to the scope of the present disclosure. The same reference numbers are used throughout the drawings to refer to the same or like parts.

In describing the present disclosure, if a detailed description for a related known function or construction is considered to unnecessarily divert the gist of the present disclosure, such explanation has been omitted but would be understood by those skilled in the art.

The present disclosure may be embodied in many different forms and should not be construed as being limited to the embodiments set forth herein; rather, these embodiments are provided so that this disclosure will be thorough and complete, and will fully convey the concept of the present disclosure to those of ordinary skill in the art.

Terms used in the present specification are used only in order to describe specific embodiments rather than limiting the present disclosure. Singular forms are intended to include plural forms unless the context clearly indicates otherwise.

In the disclosure disclosed herein, the expressions "have", "may have", "include" and "comprise", or "may include" and "may comprise" used herein indicate existence of corresponding features (e.g., elements, such as numeric values, functions, operations, or components) but do not exclude presence of additional features.

In the disclosure disclosed herein, the expressions "A or B", "at least one of A or/and B", or "one or more of A or/and B", and the like used herein may include any and all combinations of one or more of the associated listed items. For example, the term "A or B", "at least one of A and B", or "at least one of A or B" should be understood as including (1) only A, (2) only B, or (3) both A and B.

The terms, such as "first", "second", and the like used herein may refer to various elements of various embodiments of the disclosure, but do not limit the elements.

It will be understood that when an element (e.g., a first element) is referred to as being "(operatively or communicatively) coupled with/to" or "connected to" another element (e.g., a second element), it may be directly coupled with/to or connected to the other element or an intervening element (e.g., a third element) may be present. In contrast, when an element (e.g., a first element) is referred to as being "directly coupled with/to" or "directly connected to" another element (e.g., a second element), it should be understood that there are no intervening element (e.g., a third element).

However, when it is described that an element (e.g., first element) is "directly coupled" to another element (e.g., second element), no element (e.g., third element) may exist between the element and the other element.

According to the situation, the expression "configured to" used herein may be used as, for example, the expression "suitable for", "having the capacity to", "designed to", "adapted to", "made to", or "capable of". The term "configured to" must not mean only "specifically designed to" in hardware.

Instead, the expression "a device configured to" may mean that the device is "capable of" operating together with another device or other components. For example, a "processor configured to perform A, B, and C" may mean a dedicated processor (e.g., an embedded processor) for performing a corresponding operation or a generic-purpose processor (e.g., a central processing unit (CPU) or an application processor) which may perform corresponding operations by executing one or more software programs which are stored in a memory device

In the description, the word "module" or "unit" refers to a software component, a hardware component, or a combination thereof, which is capable of carrying out at least one function or operation. A plurality of modules or units may be integrated into at least one module and implemented using at least one processor except for those modules or units that need to be implemented in specific hardware.

Various elements and regions in the drawings are schematically drawn. Therefore, the technical concept of the present disclosure is not limited by a relative size or spacing drawn in the accompanying drawings.

Hereinafter, the disclosure will be described in more detail with reference to the drawings so that those skilled in the art to which the disclosure pertains may easily implement the embodiments.

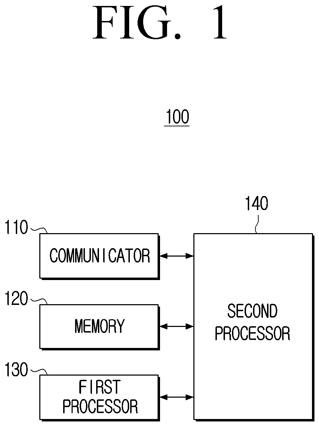

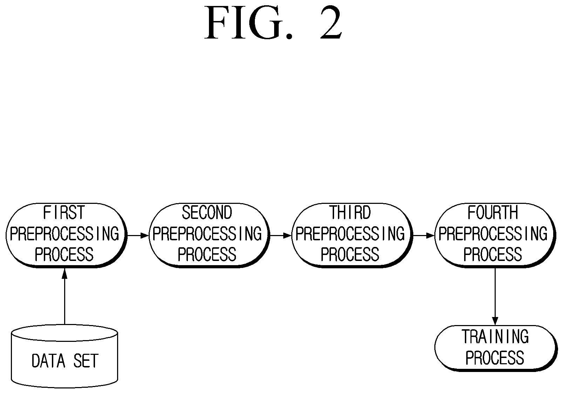

FIG. 1 is a block diagram schematically showing a configuration of an electronic device according to an embodiment of the disclosure, and FIG. 2 is a diagram showing a plurality of preprocessing processes and training processes sequentially performed according to an embodiment of the disclosure
As shown in FIG. 1, an electronic device 100 according to an embodiment of the disclosure may include a communicator (or communication interface) 110, a memory 120, a first processor 130, and a second processor 140.

First, the electronic device 100 according to the disclosure refers to a device capable of performing a training process of a neural network model. For example, the electronic device 100 may be implemented as a server for training a neural network model, or may be implemented as a device, such as a user's PC or smartphone. However, the type of electronic device 100 according to the disclosure is not particularly limited.

The neural network model according to the disclosure refers to an artificial intelligence (AI) model including a plurality of neural network layers, and the term "neural network model" may be used interchangeably with the term of artificial intelligence (AI) model in this disclosure. The neural network model according to the disclosure may sequentially perform the processes shown in FIG. 2. Specifically, the neural network model may perform a training process based on a data set (i.e., training data). In addition, the neural network model may perform a plurality of preprocessing processes prior to performing the training process.

As used herein, the term "training process" is used as a term for referring to the entire training process including a feedforward process and a backpropagation process of the neural network model, and there are no special limitations on the training method.

The term "a plurality of preprocessing processes" is used as a general term for various processes that may be performed prior to the training process of the neural network model. Referring to FIG. 2, a plurality of preprocessing processes may include a sequential preprocessing process such as a first preprocessing process of reading input data from a data set, a second preprocessing process of embedding the input data as an input value (e.g., a vector or tensor) that may be input into a neural network model, a third preprocessing process of collecting/processing input values for parallel operation of the neural network model, and a fourth preprocessing process of preparing next input data while the training process for the input data is being performed (e.g., a prefetch process of overlapping an operation process of a CPU and a GPU). The preprocessing process according to the disclosure may be implemented in various manners other than the examples described above.

The communicator 110 may include a circuit and may perform communication with the external device 200. Specifically, the processor may receive various data or information from the external device 200 connected through the communicator 110 and may transmit various data or information to the external device 200.

The communicator 110 may include at least one of a Wi-Fi module, a Bluetooth module, a wireless communication module, a near-field communication (NFC) module, and an ultra-wide band (UWB) module. Specifically, the Wi-Fi module and the Bluetooth module may perform communication using a Wi-Fi method or a Bluetooth method, respectively. In the case of using the Wi-Fi module or the Bluetooth module, various connection information, such as an SSID, may be first transmitted and received to connect for communication using the SSID, and then, transmit and receive various information.

In addition, the wireless communication module may perform communication according to various communication standards, such as IEEE, Zigbee, 3rd Generation (3G), 3rd Generation Partnership Project (3GPP), Long Term Evolution (LTE), and 5th Generation (5G). In addition, the NFC module may perform communication using an NFC method using a 13.56 MHz band among various RF-ID frequency bands, such as 135 kHz, 13.56 MHz, 433 MHz, 860 to 960 MHz, and 2.45 GHz. In addition, the UWB module may accurately calculate time of arrival (ToA), which is a time at which a pulse arrives at a target, and angle of arrival (AoA), which is an angle of arrival of a pulse in a transmitting device, through communication between UWB antennas, and accordingly, it is possible to recognize a precise distance and location within an error range of several tens of cm in an indoor area.

In particular, in various embodiments according to the disclosure, the communicator 110 may transmit input values used in a plurality of preprocessing processes or training processes according to the disclosure to the external device 200 connected to the electronic device 100. Also, the communicator 110 may obtain output values corresponding to the input values transmitted from the external device 200 and may receive information on an operation speed of the external device 200.

At least one instruction related to the electronic device 100 may be stored in the memory 120. Also, an operating system (O/S) for driving the electronic device 100 may be stored in the memory 120. Also, various software programs or applications for operating the electronic device 100 may be stored in the memory 120 according to various embodiments of the disclosure. Also, the memory 120 may include a semiconductor memory, such as a flash memory, or a magnetic storage medium, such as a hard disk.

Specifically, various software modules for operating the electronic device 100 may be stored in the memory 120 according to various embodiments of the disclosure, and the processor may control the operation of the electronic device 100 by executing various software modules stored in the memory 120. That is, the memory 120 may be accessed by the processor, and data may be read/written/corrected/deleted/updated by the processor.

Herein, the term "memory" (e.g., memory 120) may include ROM in a processor, RAM, or a memory card (e.g., micro SD card, memory stick) mounted in the electronic device 100.

In particular, in various embodiments according to the disclosure, data for a neural network model may be stored in the memory 120. Here, the data for the neural network model may include a training data set for training the neural network model, and data for layers, parameters, weights, and the like constituting the neural network model. In addition, the memory 120 may store input values for a plurality of preprocessing processes and training processes according to the disclosure and output values corresponding to the input values. Also, information on the first operation speed, the second operation speed, and the third operation speed may be stored in the memory 120. In addition, various information required within the scope of achieving the object of the disclosure may be stored in the memory 120, and the information stored in the memory 120 may be updated as received from the external device 200 or input by a user.

As shown in FIG. 1, a processor according to the disclosure may include the first processor 130 and the second processor 140. Hereinafter, it is assumed that the first processor 130 and the second processor 140 according to the present disclosure are implemented as separate components, but it is also possible to implement the first processor 130 and the second processor 140 as a single hardware component.

The first processor 130 may perform a training process of a neural network model. Also, the first processor 130 may perform an inference process of the neural network model using the trained neural network model. In particular, since an operation speed when the first processor 130 performs the training process of the neural network model is important in the disclosure, the following description will focus on the training process of the neural network model performed by the first processor 130. For example, the first processor 130 may be a graphics processing unit (GPU) or a neural processing unit (NPU), but is not limited thereto.

The second processor 140 may control the overall operation of the electronic device 100. That is, the second processor 140 may be connected to the configuration of the electronic device 100 including the communicator 110, the memory 120, and the first processor 130, and control an operation for implementing various embodiments according to the present disclosure by executing at least one instruction stored in the memory 120. For example, the second processor 140 may be a central processing unit (CPU) or a microprocessor unit (MPU), but is not limited thereto.

In particular, the second processor 140 may perform a plurality of preprocessing processes for training of the neural network model. In addition, the second processor 140 may perform a process of determining whether an operation is delayed and a process of processing the operation delay according to various embodiments of the disclosure.

In the above, it is assumed that the training process of the neural network model is performed by the first processor 130 and a plurality of preprocessing processes for the training process of the neural network model are performed by the second processor 140, but the electronic device 100 may need a process of identifying whether each of the plurality of preprocessing processes and the training process is performed by the first processor 130 or the second processor 140 based on an operation structure for the plurality of preprocessing processes and the training process.

Specifically, the second processor 140 may identify whether each of the plurality of preprocessing processes and the training process is performed by the first processor 130 or the second processor 140 based on each operation structure (e.g., directed acyclic graph (DAG)) for the plurality of preprocessing processes and the training process. In addition, a determination of whether each of the plurality of preprocessing processes and training process is performed by the first processor 130 or the second processor 140 may be set by a developer or a user.

In particular, in various embodiments according to the disclosure, for the electronic device 100, the second processor 140 may calculate a first operation speed of at least one of the plurality of preprocessing processes performed by the second processor 140 and a second operation speed of the training process performed by the first processor 130.

The second processor 140 may determine at least one process that is a target of calculation of an operation speed, among a plurality of preprocessing processes and training process, determine one input value for the at least one determined process as a test value, and calculate an operation speed by performing at least one process as a target of calculation of the operation speed based on the determined test value.

In particular, the process of determining at least one of the plurality of preprocessing processes as a target of calculation of an operation speed may be performed by selecting one of the plurality of preprocessing processes or by selecting one of combinations of two or more preprocessing processes that are sequentially performed. Here, one preprocessing process or one combination may be arbitrarily selected by the second processor 140 or may be selected by a user or developer.

After calculating an operation speed by selecting one preprocessing process or selecting one combination, the second processor 140 may select another preprocessing process or another combination different from the previously selected preprocessing process or one combination and then calculate an operation speed again, thereby identifying a portion causing delay or stall of the operation among the plurality of preprocessing processes. That is, the second processor 140 may identify a portion causing delay in operation in the entire plurality of preprocessing processes by calculating an operation speed for all combinations included in the plurality of preprocessing processes.

When at least one of the plurality of preprocessing processes is determined as a target of calculation of an operation speed, the second processor 140 may store one test value for the at least one preprocessing process in the memory 120 and repeatedly perform at least one preprocessing process based on the stored test vale to calculate a first operation speed. In describing the disclosure, the term "first operation speed" is used as a term indicating an operation speed of at least one preprocessing process, which is a target of calculation of an operation speed, among a plurality of preprocessing processes performed by the second processor 140.

The second processor 140 may calculate a second operation speed by storing one test value for a training process in the memory 120 and repeatedly performing a training process based on the stored test value. In describing the disclosure, the term "second operation speed" is used as a term indicating an operation speed of a training process performed by the first processor 130.

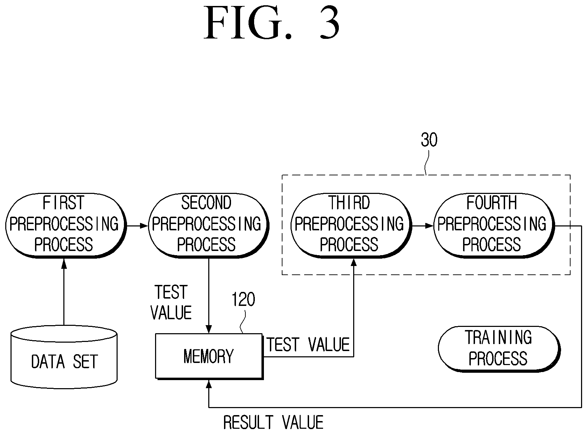

A process of calculating an operation speed according to the disclosure will be described in more detail with reference to FIG. 3.

As a result of calculating the first operation speed and the second operation speed, if the first operation speed is slower than the second operation speed, the second processor 140 may control the communicator 110 to transmit at least one of input values for at least one preprocessing process to the external device 200 connected to the electronic device 100. Also, the second processor 140 may obtain an output value corresponding to at least one input value by receiving a processing result of the external device 200 for the at least one input value from the external device 200 through the communicator 110.

Specifically, the first operation speed being slower than the second operation speed means that at least one preprocessing process performed by the second processor 140 is delayed prior to the training process performed by the first processor 130. That is, the fact that the first operation speed is slower than the second operation speed means that a bottleneck of the operation has occurred in at least one preprocessing process, which is a target of calculation of the operation speed.

Accordingly, the second processor 140 may control the communicator 110 to transmit at least one input value among input values for at least one preprocessing process to the external device 200. This may be briefly referred to as a data offloading operation. At this time, the external device 200 that has received at least one input value may perform at least one preprocessing process instead of the electronic device 100 using an external processor included in the external device 200, and accordingly, obtain a processing result for at least one input value. Thereafter, the second processor 140 may receive a processing result of the external device 200 for at least one input value from the external device 200 through the communicator 110 and obtain an output value corresponding to the at least one input value. Since the external device 200 according to the disclosure is a device for substitutionally performing at least one preprocessing process among a plurality of preprocessing processes, which is to be performed by the second processor (e.g., CPU) of the electronic device 100, the external device 200 may include only hardware corresponding to the second processor (e.g., a CPU) of the electronic device 100 and may not need to include hardware corresponding to the first processor (e.g., a GPU) of the electronic device 100.

If the first operation speed is faster than the second operation speed, it may be a case in which there is no delay for at least one preprocessing process, so the second processor 140 may perform at least one preprocessing process on at least one input value to obtain an output value corresponding to the at least one input value. In this case, the processor may calculate the first operation speed of one or more other preprocessing processes that are different from the at least one preprocessing process as a target of calculation of the operation speed, and compare the first operation speed with the second operation speed to identify whether a delay occurs in one or more preprocessing processes.

When the first operation speed is faster than the second operation speed, it may be a case in which there is no delay for at least one preprocessing process or may be a case in which there is a delay in the training process of the neural network model by the first processor 130. Accordingly, the second processor 140 may divide the neural network model or data processed by the first processor 130 into smaller units and control the neural network model so that the first processor 130 may process fewer operations. In other words, when a delay in operation occurs in at least one preprocessing process by the second processor 140, the second processor 140 may resolve the delay by performing the data offloading operation as described above, and when a delay in operation occurs in the training process by the first processor 130, the second processor 140 may resolve the delay by dividing and processing the operation process of the first processor 130 in parallel. According to an embodiment, the data offloading for the second processor 140 and the dividing of the operation process for the second processor 140 may be performed together.

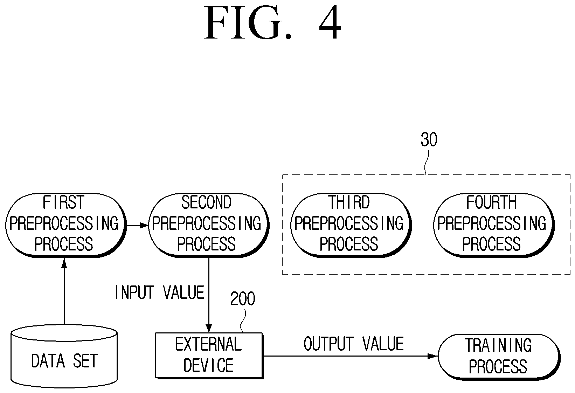

In the above embodiment, an embodiment in which, when a delay occurs in at least one preprocessing process, at least one of input values for at least one preprocessing process is transmitted to the external device 200 connected to the electronic device 100 is described, but specifically, whether to transmit a certain amount of the input values to the external device 200 may be determined differently according to an embodiment. An embodiment of determining the amount of input values to be transmitted to the external device 200 among the input values for at least one preprocessing process will be described in detail with reference to FIG. 4.

Although the calculation process of the first operation speed has been described above, if the first operation speed has already been calculated for at least a portion of the preprocessing process or the training process, for example, the first preprocessing process, and information on the first operation speed has already been stored in the memory 120, there is no need to calculate the first operation speed for the first preprocessing process again. Therefore, when the information on the operation speed of the processing process having the same operation structure as that of the first preprocessing process is stored in the memory 120, the second processor 140 may determine the first operation speed based on the information on the operation speed stored in the memory 120.

Here, the fact that the operation structure is the same may mean that, for example, a DAG representing the operation structure of the first preprocessing process is the same as a DAG representing the operation structure of the previously performed processing process and resource of the electronic device 100 for performing the operation process, that is, a component used in the corresponding operation process, among the memory 120, the first processor 130, and the second processor 140, is the same.

An embodiment in which at least some of the input values used in the preprocessing process of the neural network model are transmitted to the external device 200 has been described, but if a third processor capable of performing a function similar to that of the second processor 140 exists in the electronic device 100, the third processor may process at least some of the input values.

According to the embodiment described above with reference to FIGS. 1 and 2, the electronic device 100 may identify a portion that causes an operation delay in the preprocessing processes performed prior to the training process of the neural network model and transmit the input value for the portion to the external device 200, thereby solving a bottleneck phenomenon caused due to preprocessing.

For example, when the electronic device 100 is implemented as a cloud server for providing resources for training of the neural network model, the user may be allocated a limited amount of resources to train the neural network model. In this case, when an operation delay occurs during the preprocessing of the neural network model that the user wants to train, the delay of operation may be minimized by offloading the data to a device (e.g., another server or the user's PC) other than the cloud server.

FIG. 3 is a diagram illustrating a method of determining whether a third preprocessing process and a fourth preprocessing process are delayed in an operation among a plurality of preprocessing processes according to an embodiment of the disclosure.

With regard to the description of FIG. 3, it is assumed that a plurality of preprocessing processes according to the disclosure include a first preprocessing process, a second preprocessing process, a third preprocessing process, and a fourth preprocessing process, and that the training process of the neural network model is performed after the fourth preprocessing process. In addition, in the description of FIG. 3, a process of determining whether an operation is delayed according to the third preprocessing process and the fourth preprocessing process is described based on the assumption that the third preprocessing process and the fourth preprocessing process followed by the third preprocessing process, among the plurality of preprocessing processes, are determined as a target 30 of calculation of an operation speed is described.

As shown in FIG. 3, the second processor 140 may perform a first preprocessing process and a second preprocessing process on one input value in a data set for training a neural network model. In addition, when the first preprocessing process and the second preprocessing process are performed, the second processor 140 may determine one output value, according to a result of performing the first preprocessing process and the second preprocessing process, as a test value. In other words, the second processor 140 may extract one input value from the data set and perform a preprocessing process up to the third preprocessing process, which is the first process of the target 30 of the calculation of the operation speed, on the extracted one input value, thereby obtaining one test value.

The second processor 140 may store one test value in the memory 120. Specifically, the second processor 140 may cache the test value in a region of the memory 120 so that the test value may be maintained in the memory 120 while calculating at least the first operation speed. Thereafter, the second processor 140 may perform a third preprocessing process and a fourth preprocessing process based on the test value stored in the memory 120. When the third preprocessing process and the fourth preprocessing process are performed on the test value, the second processor 140 may store a final result value according to a result of performing the third preprocessing process and the fourth preprocessing process in the memory 120 and may repeatedly perform the third preprocessing process and the fourth preprocessing process on one test value, instead of performing a training process for the result value. That is, when one test value is obtained, the second processor 140 may repeatedly perform the third preprocessing process and the fourth preprocessing process after obtaining one test value in the memory 120 in order to prevent the test value from being affected in the preprocessing process other than the third preprocessing process and the fourth preprocessing process.

When the third preprocessing process and the fourth preprocessing process for one test value are repeatedly performed, the second processor 140 may calculate a first operation speed according to performing the third preprocessing process and the fourth preprocessing process. For example, if the third preprocessing process and the fourth preprocessing process for one test value may be completed by repeating 50 times for 1 second, the second processor 140 may identify that the third preprocessing process and the fourth preprocessing process for 50 input values may be performed by the second processor 140 for 1 second. Of course, the unit and operation method of the operation speed are not limited to the above example.

The method of determining whether an operation is delayed described above may be implemented by inserting a predetermined source code between source codes for implementing at least one preprocessing process. For example, when the target 30 of the calculation of the operation speed is the third preprocessing process and the fourth preprocessing process, the second processor 140 may insert a source code (e.g., take(1)) for determining one output value as a test value, a source code (e.g., cache()) for caching the test value in a region of the memory 120 so that the test value may be maintained in the memory 120, and a source code (e.g., repeat()) for repeatedly performing the third preprocessing process and the fourth preprocessing process for one test value in front of a source code for implementing the third preprocessing process. Also, the second processor 140 may insert a source code (e.g., GetNext()) to be stored in the memory 120 behind the source code for implementing the fourth preprocessing process without using a final result value according to the result of performing the third preprocessing process and the fourth preprocessing process as an input value for the training process of the neural network model.

For the second processor 140 to automatically insert the source code as described above, rather than manually profiling the source code by the user, it is necessary to classify a plurality of preprocessing processes and identify whether each of the plurality of preprocessing processes and the training process are performed by the first processor 130 or the second processor 140 first. Accordingly, the second processor 140 may classify the plurality of preprocessing processes based on each operation structure (e.g., a DAG structure) for a plurality of preprocessing processes and the training process and identify whether the plurality of preprocessing processes and the training process are performed by the first processor 130 or the second processor 140.

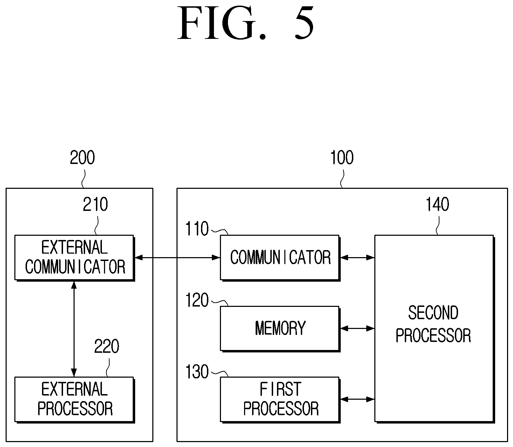

FIG. 4 is a diagram illustrating a method of performing at least a portion of a third preprocessing process and a fourth preprocessing process through the external device 200 according to an embodiment of the disclosure, and FIG. 5 is a block diagram showing a configuration of the external device 200 together with a configuration of the electronic device 100 for performing at least a portion of a preprocessing process according to the disclosure.

In the description of FIG. 4, as in the description of FIG. 3, it is assumed that a plurality of preprocessing processes and a training process are sequentially performed, and among the plurality of preprocessing processes, the third preprocessing process and the fourth preprocessing process are determined as the target 30 of calculation of the operation speed. In addition, in the description of FIG. 4, an embodiment in which at least some of the input values for the third preprocessing process and the fourth preprocessing process are offloaded to the external device 200 based on the assumption that the first operation speed of the third preprocessing process and the fourth preprocessing process among the plurality of preprocessing processes is calculated and a delay occurs in operation in the third preprocessing process and the fourth preprocessing process will be described in detail.

If the first operation speed is slower than the second operation speed, the second processor 140 may control the communicator 110 to transmit at least one of input values for the third preprocessing process and the fourth preprocessing process to the external device 200 connected to the electronic device 100. Also, the second processor 140 may receive a processing result of the external device 200 for at least one input value from the external device 200 through the communicator 110, thereby obtaining an output value corresponding to the at least one input value.

Specifically, the external device 200 according to the disclosure may include an external communicator 210 and an external processor 220 as shown in FIG. 5. Like the communicator 110 of the electronic device 100, the external communicator 210 refers to a component capable of performing communication with the electronic device 100. Also, like the second processor of the electronic device 100, the external processor 220 refers to a component capable of performing a plurality of preprocessing processes for the training process of the neural network model and capable of performing a process of determining whether an operation is delayed according to various embodiments of the disclosure. Meanwhile, the external device 200 may not include a separate processor for a training process of the neural network model, such as the first processor 130 of the electronic device 100.

The second processor 140 may control the communicator 110 to transmit one test value for at least one preprocessing process to the external device 200. At this time, the external processor 220 of the external device 200 may receive the test value from the electronic device 100 through the external communicator 210. In addition, the external processor 220 of the external device 200 may calculate a third operation speed of a case of performing at least one preprocessing process for the test value by the external processor 220 using the same method as the calculation method of the first operation speed described above. Thereafter, the external processor 220 of the external device 200 may control the external communicator 210 to transmit information indicating the third operation speed to the electronic device 100, and accordingly, the second processor 140 may receive information indicating the third operation speed from the external device 200 through the communicator 110.

The second processor 140 may determine the number of at least one input value to be transmitted to the external device 200, among input values for at least one preprocessing process, based on at least one of a difference between the first operation speed and the second operation speed, the third operation speed, and a transmission amount of data that may be transmitted through a bandwidth of a network connecting the electronic device 100 and the external device 200. In addition, various other factors may also be used in determining the number of input values for offloading.

In an embodiment, the second processor 140 may calculate the number of input values that may be processed at an operation speed equal to the difference between the first operation speed and the second operation speed for a predetermined period of time. For example, if the first operation speed indicates that 100 input values may be calculated per second and the second operation speed indicates that 150 input values may be operated per second, this may be a case in which the operation is delayed as much as that the second processor 140 operates 50 input values per second. Accordingly, in this case, the second processor 140 may control the communicator 110 to transmit 50 input values per second to the external device 200. That is, this embodiment may be referred to as an embodiment of offloading input values corresponding to the delay in operation by the second processor 140.

In an embodiment, the second processor 140 may calculate the number of input values that may be processed at the third operation speed for a predetermined time period. For example, if the third operation speed indicates that 30 input values may be operated per second, this means that even if the external device 200 receives more than 30 input values per second, delay may occur in operation for an input value greater than 30 input values per second. Accordingly, in this case, the second processor 140 may control the communicator 110 to transmit 30 input values per second to the external device 200. That is, this embodiment may be referred to as an embodiment of offloading enough input values to solve the delay of operation by the external processor 220 of the external device 200.

In an embodiment, the second processor 140 may calculate the number of input values that may be transmitted through a bandwidth of a network during a predetermined time. Specifically, the second processor 140 may divide the bandwidth of the network by a data size when the input value is transmitted through the network to calculate the number of input values that may be transmitted through the bandwidth of the network during a predetermined time. For example, if the number of input values that may be transmitted through the bandwidth of the network for one second is 20, this means that the external device 200 may receive only 20 input values per second through the external communicator 210, even though the second processor 140 transmits more than 20 input values per second to the external device 200. Accordingly, in this case, the second processor 140 may control the communicator 110 to transmit 20 input values per second to the external device 200. That is, this embodiment may be an embodiment of offloading as many input values as fit to the bandwidth of the network.

In an embodiment, the second processor 140 may determine, as the number of at least one input value that may be transmitted to the external device 200, a minimum number, among the number of input values that may be processed at an operation speed equal to a difference between the first operation speed and the second operation speed for a predetermined time period, the number of input values that may be processed at the third operation speed for a predetermined time period, and the number of input values that may be transmitted through the bandwidth of the network during the predetermined time period. In the above example, the second processor 140 may determine, as the number of at least one input value to be transmitted to the external device 200 per second, the minimum number 20, among 50 which is the number of input values that may be processed at the operation speed corresponding to the difference between the first operation speed and the second operation speed per second, 30 which is the number of input values that may be processed at the third operation speed per second, and 20 which is the number of input values that may be transmitted through the bandwidth of the network during the predetermined time period.

In other words, the number of at least one input value to be transmitted to the external device 200 may be calculated using the formula RCthp = min(NB/d_size1, Gthp1 - Cthp1, Cthp2). Here, RCthp refers to the number of at least one input value to be transmitted to the external device 200, that is, maximum throughput of data that may be offloaded to the external processor 220 of the external device 200 to be processed. Further, Cthp1 refers to the number of input values according to the first operation speed by the first processor 130, Gthp1 refers to the number of input values according to the second operation speed by the second processor 140, and Cthp2 refers to the number of input values according to the third operation speed by the external processor 220, and NB/d_size refers to the number of input values that may be transmitted through the bandwidth of the network.

Specifically, the second processor 140 may calculate at least one of NB/d_size1, Gthp1-Cthp1, and Cthp2, and calculate the minimum value RCthp among the calculated values. Also, the second processor 140 transmits input values equal to RCthp to the external processor 220 to perform preprocessing, and the second processor 140 itself may perform preprocessing on the remaining input values. While throughput of the first processor 130 before performing offloading according to the disclosure is min(Ghp1, Cthp1), throughput of the first processor 130 after performing offloading is min(Ghp1, Cthp1 + RCthp). Therefore, since min(Ghp1, Cthp1 + RCthp) is always greater than or equal to min(Ghp1, Cthp1), the efficiency of the first processor 130 may be improved.

In the above, an embodiment in which the calculation process of the third operation speed is performed by the external device 200 and the electronic device 100 receives information on the third operation speed has been described, but the process of calculating the third operation speed may also be performed by the electronic device 100. Specifically, the second processor 140 may control the communicator 110 to transmit one test value for at least one preprocessing process to the external device 200, and when a processing result of the external device 200 for the test value is received from the external device 200 through the communicator 110, the second processor 140 may calculate a third operation speed based on a time point at which the test value is transmitted to the external device 200 and a time point at which the processing result is received from the external device 200.

In the embodiments of FIGS. 3 to 5, at least a portion of the third preprocessing process and the fourth preprocessing process is performed by the external device 200 based on the assumption that operation delay occurs in the process of including the third preprocessing process and the fourth preprocessing process, but the embodiment described above may also be applied to each of the third preprocessing process and the fourth preprocessing process in order for the second processor 140 to clearly identify the process of causing a delay of operation among the third preprocessing process and the fourth preprocessing process.

According to the embodiments described above with reference to FIGS. 3 to 5, when there is a portion that causes operation delay during the preprocessing process, the electronic device 100 may transmit input values sufficient to resolve the operation delay to the external device 200, thereby effectively solving a bottleneck phenomenon due to the preprocessing.

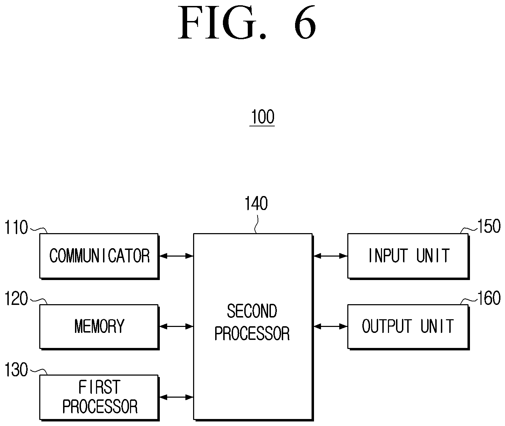

FIG. 6 is a block diagram showing a configuration of the electronic device 100 according to an embodiment of the disclosure in detail.

As shown in FIG. 6, the electronic device 100 according to an embodiment of the disclosure may further include an input unit 150 and an output unit 160 in addition to the communicator 110, the memory 120, the first processor 130, and the second processor 140. However, the components shown in FIGS. 1 and 6 are only examples, and new components may be added or some components may be omitted in addition to the components shown in FIGS. 1 and 6 in practicing the disclosure.

The input unit 150 may include a circuit, and the processor may receive a user command for controlling the operation of the electronic device 100 through the input unit 150. Specifically, the input unit 150 may include components, such as a microphone, a camera, and a remote control signal receiving unit. Also, the input unit 150 may be implemented as a touch screen included in a display. In particular, the microphone may receive an audio signal and convert the received audio signal into an electrical signal.

In particular, in various embodiments according to the disclosure, the second processor 140 may receive a user input for training a neural network model through the input unit 150, calculate an operation speed according to the disclosure, and receive a user input for performing transmission of an input value. In addition, the second processor 140 may receive a user input through the input unit 150 to receive information on a calculation result of an operation speed and a bottleneck relief rate according to transmission of an input value.

The output unit 160 may include a circuit, and the processor may output various functions that the electronic device 100 may perform through the output unit 160. Also, the output unit 160 may include at least one of a display, a speaker, and an indicator.

The display may output image data under the control of the processor. Specifically, the display may output an image pre-stored in the memory 120 under the control of a processor.

In particular, the display according to an embodiment of the disclosure may display a user interface stored in the memory 120. The display may be implemented as a liquid crystal display panel (LCD), organic light emitting diodes (OLED), or the like, and the display may also be implemented as a flexible display, a transparent display, or the like, depending on circumstances. However, the display according to the disclosure is not limited to a specific type.

The speaker may output audio data under the control of the processor, and the indicator may be turned on under the control of the processor.

In particular, in various embodiments according to the disclosure, the second processor 140 may output information on a calculation result of an operation speed and a bottleneck relief rate according to transmission of an input value through the output unit 160. For example, the second processor 140 may control the display to display information on an operation speed of a training process performed by the first processor 130, information on an operation speed for each preprocessing process performed by the first processor 130, and information on an operation speed of at least one preprocessing process performed by the external device 200. In addition, the second processor 140 may control the display to display information on the degree of relief of an operation delay by transmitting information on the degree to which an operation is delayed during each preprocessing process performed by the first processor 130 and at least one input value to the external device 200.

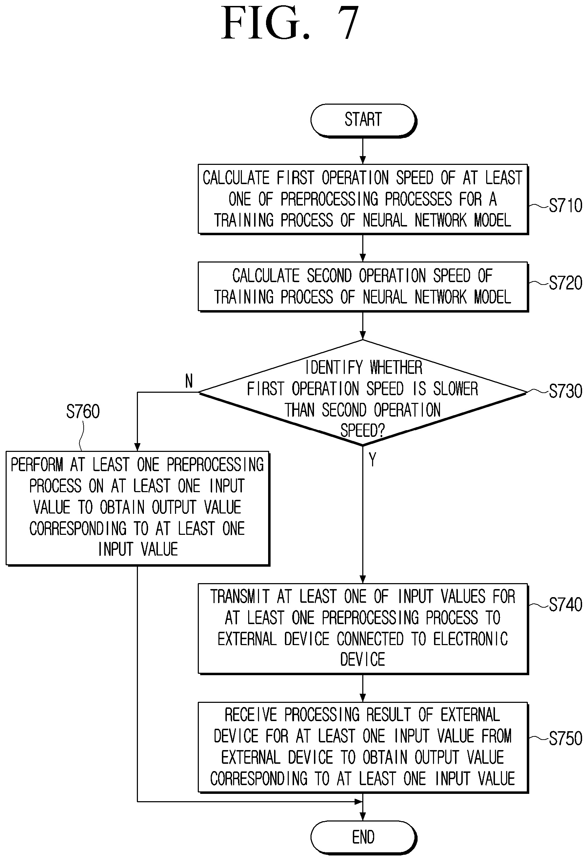

FIG. 7 is a flowchart illustrating a method of controlling the electronic device 100 according to an embodiment of the disclosure.

In the description of FIG. 7, the electronic device 100 may include a first processor and a second processor, it is assumed that a training process of a neural network model may be performed by the first processor and a plurality of preprocessing processes for the training process are performed by the second processor.

Referring to FIG. 7, the electronic device 100 may calculate a first operation speed of at least one preprocessing process among a plurality of preprocessing processes for a training process of a neural network model (S710). Specifically, when at least one preprocessing process among a plurality of preprocessing processes is determined as a target of calculation of an operation speed, the electronic device 100 may store one test value for the at least one preprocessing process in a memory and calculate a first operation speed by repeatedly performing at least one preprocessing process based on the stored test value.

The electronic device 100 may calculate a second operation speed of the training process of the neural network model (S720). Specifically, the electronic device 100 may calculate the second operation speed by storing one test value for a training process in a memory and repeatedly performing the training process based on the stored test value. In FIG. 7, for convenience, the operation of calculating the first operation speed and the operation of calculating the second operation are separately specified, but there is no order restriction between the operation of calculating the first operation speed and the operation of calculating the second operation speed, and at least portions of the operation of calculating the first operation speed and the operation of calculating the second operation speed may be performed simultaneously.

The electronic device 100 may identify whether the first operation speed is slower than the second operation speed (S730). Specifically, if the first operation speed is identified as being slower than the second operation speed (S730-Y) as a result of comparing the first operation speed with the second operation speed, the electronic device 100 may transmit at least one of input values for at least one preprocessing process to the external device 200 connected to the electronic device 100 (S740). Also, the electronic device 100 may receive a processing result of the external device 200 for at least one input value from the external device 200 to obtain an output value corresponding to at least one input value (S750).

Specifically, the first operation speed being slower than the second operation speed means that at least one preprocessing process performed by the second processor 140 is delayed prior to the training process performed by the first processor. Therefore, the second processor may offload at least one of the input values for at least one preprocessing process to the external device 200, thereby minimizing the delay in the operation speed.

In particular, the electronic device 100 may determine the number of at least one input value to be transmitted to the external device 200, among input values for at least one preprocessing process, based on at least one of a difference between the first operation speed and the second operation speed, the third operation speed of at least one preprocessing process by the external device 200, and a transmission amount of data that may be transmitted through a bandwidth of a network connecting the electronic device 100 and the external device 200.

If the first operation speed is faster than the second operation speed (S730-N), the electronic device 100 may perform at least one preprocessing process on the at least one input value to obtain an output value corresponding to the at least one input value (S760).

Specifically, if the first operation speed is identified as being faster than the second operation speed (S730-N), it may be a case in which there is no delay for at least one preprocessing process, so the second processor may obtain an output value corresponding to at least one input value by performing at least one preprocessing process on the at least one input value by itself. In this case, the processor may calculate the first operation speed of one or more other preprocessing processes that are different from the at least one preprocessing process as a target of calculation of the operation speed and compare the first operation speed with the second operation speed to identify whether a delay occurs in one or more preprocessing processes.

Meanwhile, the method of controlling the electronic device 100 according to the embodiment described above may be implemented as a program and provided to the electronic device 100. In particular, the program including the method of controlling the electronic device 100 may be stored and provided in a non-transitory computer-readable medium.

Specifically, in a non-transitory computer-readable recording medium including a program of executing the method of controlling the electronic device 100, the method of controlling the electronic device 100 may include calculating a first operation speed of at least one of the plurality of preprocessing processes performed by the second processor and a second operation speed of the training process performed by the first processor, transmitting at least one of input values for the at least one preprocessing process to the external device 200 connected to the electronic device 100 when the first operation speed is slower than the second operation speed, and obtaining an output value corresponding to the at least one input value by receiving a processing result of the external device 200 for the at least one input value from the external device 200.

In the above, the method of controlling the electronic device 100 and the computer-readable recording medium including the program for executing the method of controlling the electronic device 100 have been briefly described, but this is only for omitting redundant description, and various embodiments of the electronic device 100 may also be applied to the method of controlling the electronic device 100 and the computer-readable recording medium including the program for executing the method of controlling the electronic device 100.

According to various embodiments of the disclosure as described above, the electronic device 100 identifies a portion that causes operation delay during a preprocessing process performed prior to a training process of a neural network model and transmits an input value for the portion to the external device 200, thereby solving a bottleneck phenomenon due to preprocessing. In addition, when there is a portion that causes delay in operation during the preprocessing process, the electronic device 100 transmits as many input values as possible to resolve the delay in operation to the external device 200, thereby reducing the bottleneck phenomenon caused by the preprocessing.

Meanwhile, the functions related to the above may be performed through a memory and a processor.

The processor may be configured as one or a plurality of processors. In this case, one or the plurality of processors may be general-purpose processors, such as CPUs and APs, graphics-only processors, such as GPUs and VPUs, or AI-only processors, such as NPUs.

The one or a plurality of processors control to process input data according to a predefined operation rule or AI model stored in a non-volatile memory or a volatile memory. The predefined operation rule or AI model is made through training

Here, being made through training may refer, for example, to a predefined operation rule or AI model having desired characteristics being made by applying a training algorithm to a plurality of training data. Such training may be performed in a device itself in which the AI according to the disclosure is performed, or may be performed through a separate server/system.

The AI model may be configured with a plurality of neural network layers. Each layer has a plurality of weight values, and a layer operation is performed through operation of the previous layer and an operation between the plurality of weights. Examples of neural networks include Convolutional Neural Network (CNN), Deep Neural Network (DNN), Recurrent Neural Network (RNN), Restricted Boltzmann Machine (RBM), Deep Belief Network (DBN), Bidirectional Recurrent Deep Neural Network (BRDNN), and GAN (GAN). Generative Adversarial Networks) and Deep Q-Networks, which are not limited to the above examples.

The training algorithm may refer, for example, to a method of training a predetermined target device (e.g., a robot) using a plurality of training data so that the predetermined target device may make a decision or make a prediction by itself. Examples of the training algorithm include supervised training, unsupervised training, semi-supervised training, or reinforcement training, and the training algorithm in the disclosure is not limited to the examples mentioned above, except for a specified case.

The device-readable storage medium may be provided in the form of a non-transitory storage medium. Here, 'non-temporary storage medium' only means that it is a tangible device and does not contain signals (e.g., electromagnetic waves). This term does not distinguish between a case in which data is stored semi-permanently in a storage medium and a case in which data is stored temporarily. For example, a 'non-temporary storage medium' may include a buffer in which data is temporarily stored.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smartphones) directly. If distributed online, at least part of the computer program product (e.g., a downloadable app) may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration.

According to various embodiments, operations performed by the module, the program, or another component may be carried out sequentially, in parallel, repeatedly, or heuristically, or one or more of the operations may be executed in a different order or omitted, or one or more other operations may be added.

Meanwhile, the term "module" used herein may represent, for example, a unit including one or more combinations of hardware, software and firmware, and may be interchangeably used with the terms "logic", "logical block", "part" and "circuit". The "module" may be a minimum unit of an integrated part or may be a part thereof. The "module" may be a minimum unit for performing one or more functions or a part thereof. For example, the "module" may include an application-specific integrated circuit (ASIC).

Various embodiments of the disclosure may be implemented by software including an instruction stored in a machine-readable storage media (e.g., an internal memory 136 or an external memory 138) readable by a machine (e.g., a computer). The machine may be a device that calls the instruction from the machine-readable storage media and operates depending on the called instruction and may include the electronic device (e.g., the electronic device 101).

When the instruction is executed by the processor (e.g., the processor 130), the processor may perform a function corresponding to the instruction directly or using other components under the control of the processor. The instruction may include a code generated or executed by a compiler or an interpreter.

In the above, specific embodiments have been illustrated and described, but the disclosure is not limited to the specific embodiments described above, and those of ordinary skill in the art pertaining to the disclosure without departing from the gist of the claims. Various modifications are possible by the disclosure, of course, and these modifications should not be individually understood from the technical spirit or perspective of the disclosure.

## Claims

1. An electronic device comprising:
a communicator;
at least one memory configured to store data for a neural network model;
at least one first processor configured to perform a training process of the neural network model; and
at least one second processor configured to:
perform a plurality of preprocessing processes for the training process,
determine a first operation speed of at least one preprocessing process of the plurality of preprocessing processes performed by the at least one second processor and a second operation speed of the training process performed by the at least one first processor,
based on the first operation speed being slower than the second operation speed, control the communicator to transmit at least one input value for the at least one preprocessing process to an external device connected to the electronic device, and
obtain an output value corresponding to the at least one input value by receiving, through the communicator, a processing result of the external device for the at least one input value from the external device.

2. The electronic device of claim 1, wherein the at least one second processor is further configured to:
store a test value for the at least one preprocessing process in the at least one memory, and
determine the first operation speed by repeatedly performing the at least one preprocessing process based on the stored test value.

3. The electronic device of claim 2, wherein the at least one second processor is further configured to, based on the first operation speed being faster than the second operation speed, obtain an output value corresponding to the at least one input value by performing the at least one preprocessing process on the at least one input value.

4. The electronic device as claimed in claim 2, wherein the at least one second processor is further configured to:
control the communicator to transmit the test value to the external device,
based on the at least one preprocessing process for the test value being performed by the external device, receive, from the external device through the communicator, information indicating a third operation speed, and
determine a number of the at least one input value for the at least one preprocessing process to be transmitted to the external device based on at least one of a difference between the first operation speed and the second operation speed, the third operation speed, and a transmission amount of data transmittable through a bandwidth of a network connecting the electronic device and the external device.

5. The electronic device of claim 4, wherein the at least one second processor is further configured to determine, as the number of the at least one input value to be transmitted to the external device, a minimum number among a number of input values that can be processed at an operation speed equal to a difference between the first operation speed and the second operation speed for a predetermined time period, a number of input values that can be processed at the third operation speed during the predetermined time period, and a number of input values that can be transmitted through a bandwidth of the network during the predetermined time period.

6. The electronic device of claim 4, wherein the at least one second processor is further configured to, based on receiving, from the external device through the communicator, a processing result of the external device for the test value, determine the third operation speed based on a time point at which the test value is transmitted to the external device and a time point at which the processing result is received from the external device.

7. The electronic device of claim 1, wherein the at least one second processor is further configured to, based on information on an operation speed of a processing process having the same operation structure as that of the at least one preprocessing process being stored in the at least one memory, determine the first operation speed based on the information on the operation speed stored in the at least one memory.

8. The electronic device of claim 1, wherein the at least one first processor comprises a graphics processing unit (GPU) or a neural processing unit (NPU), and the at least one second processor comprises a central processing unit (CPU) or a microprocessor unit (MPU).

9. A method of controlling an electronic device, the method comprising:
determining a first operation speed of at least one preprocessing process of a plurality of preprocessing processes performed by at least one second processor of the electronic device and a second operation speed of a training process of a neural network model performed by at least one first processor of the electronic device;
based on the first operation speed being slower than the second operation speed, transmitting at least one input value for the at least one preprocessing process to an external device connected to the electronic device, and
obtaining an output value corresponding to the at least one input value by receiving a processing result of the external device for the at least one input value from the external device.

10. The method of claim 9, wherein the determining comprises:
storing a test value for the at least one preprocessing process in at least one memory of the electronic device; and
determining the first operation speed by repeatedly performing the at least one preprocessing process based on the stored test value.

11. The method of claim 10, further comprising, based on the first operation speed being faster than the second operation speed, obtaining an output value corresponding to the at least one input value by performing the at least one preprocessing process on the at least one input value.

12. The method of claim 10, further comprising:
transmitting the test value to the external device;
based on the at least one preprocessing process for the test value being performed by the external device, receiving, from the external device, information indicating a third operation speed; and
determining a number of the at least one input value for the at least one preprocessing process to be transmitted to the external device based on at least one of a difference between the first operation speed and the second operation speed, the third operation speed, and a transmission amount of data transmittable through a bandwidth of a network connecting the electronic device and the external device.

13. The method of claim 12, wherein the determining the number of the at least one input value comprises determining, as the number of the at least one input value to be transmitted to the external device, a minimum number among a number of input values that can be processed at an operation speed equal to a difference between the first operation speed and the second operation speed for a predetermined time period, a number of input values that can be processed at the third operation speed during the predetermined time period, and a number of input values that can be transmitted through a bandwidth of the network during the predetermined time period.

14. The method of claim 12, further comprising, based on receiving, from the external device, a processing result of the external device for the test value, determining the third operation speed based on a time point at which the test value is transmitted to the external device and a time point at which the processing result is received from the external device.

15. A non-transitory computer-readable recording medium storing instructions that by at least one processor execute a method of controlling an electronic device, the method comprising:
determining a first operation speed of at least one preprocessing process of a plurality of preprocessing processes performed by at least one second processor of the electronic device and a second operation speed of a training process of a neural network model performed by at least one first processor of the electronic device;
based on the first operation speed is slower than the second operation speed, transmitting at least one input value for the at least one preprocessing process to an external device connected to the electronic device; and
obtaining an output value corresponding to the at least one input value by receiving a processing result of the external device for the at least one input value from the external device.
